# DEMANDE DE BREVET EUROPEEN

(11) **EP 4 821 345 A1**
(43) Date de publication de la demande: **14.10.2026**
(21) Numéro de dépôt: 26181467.7
(22) Date de dépôt: 15.11.2022
(51) Int. Cl.: A01G 9/24

(54) **SYSTÈME PASSIF DE RÉGULATION THERMIQUE PASSIVE POUR SERRE AGRICOLE**

(30) Priorité: 19.11.2021 FR 2112245; 21.01.2022 FR 2200539
(62) Numéro(s) de document de la (des) demande(s) initiale(s) en application de l'article 76 CBE: 22818285.3 / 4 432 817
(71) Demandeur: AGRITHERMIC, 73290 La Motte-Servolex (FR); ASTREDHOR - Institut des professionnels du Vegetal, 75014 Paris (FR)
(72) Inventeur: STAUFFER, Vincent, 73290 LA MOTTE-SERVOLEX (FR); DARFEUILLE, Bernard, 69126 BRINDAS (FR)
(74) Mandataire: Innovincia

(57) **Abrégé**

L'invention concerne un système [passif de régulation thermique (10) pour serre agricole (200), comprenant au moins un réservoir (20) absorbeur/diffuseur et accumulateur de chaleur destiné à être exposé au rayonnement solaire, caractérisé en ce que ledit réservoir (20) comporte une paroi (30) formant un absorbeur/diffuseur de chaleur apte à être chauffé par rayonnement solaire, et un accumulateur (40) de chaleur apte à stocker de l'énergie calorifique absorbée par la paroi (30), la paroi (30) étant apte à transférer de la chaleur à l'accumulateur (40), et apte à transférer puis diffuser la chaleur ou la fraicheur de l'accumulateur (40) vers l'extérieur du réservoir (20).

## Description

L'invention concerne un système passif de régulation thermique pour serre bioclimatique. On appelle système bioclimatique, un système apte à tirer parti des conditions du site d'installation du système et de son environnement.

L'invention s'applique plus particulièrement au chauffage d'une serre agricole et à la stabilisation de sa température en utilisant le rayonnement solaire.

Afin de pouvoir cultiver des plantes en serre agricole, il est nécessaire d'apporter de la lumière et de la chaleur en proportion appropriée. En effet, les plantes poussent dans une gamme de température restreinte.

De façon générale, les serres bioclimatiques agricoles utilisant le rayonnement solaire stockent la chaleur du rayonnement solaire pendant la journée, et restituent cette chaleur pendant la nuit ou dans des conditions nuageuses. Pour cela, on expose des réservoirs calorifiques au rayonnement solaire dans la serre agricole. Les réservoirs calorifiques contiennent par exemple de l'eau ou des pierres ou peuvent être un mur en terre. En effet, l'eau et/ou les pierres et/ou la terre stockent la chaleur du rayonnement solaire et la réémettent lentement pendant la nuit.

Cependant, l'eau et/ou les pierres/ la terre ne restituent pas la chaleur de façon stable, c'est-à-dire avec une température constante. La restitution de chaleur dépend des conditions climatiques extérieures et de la serre agricole. La température du réservoir calorifique dépend de l'ensoleillement, des températures intérieures et extérieures de la serre. Cette température est donc difficilement contrôlable, fluctuante et rarement adaptée aux températures demandées par les cultures.

De plus, la quantité de chaleur stockée par l'eau et/ou les pierres et/ou la terre n'est pas toujours suffisante pour maintenir une serre agricole hors gel sur de longues périodes.

On connaît aussi des réservoirs calorifiques contenant des matériaux à changement de phase (MCP ou PCM pour « Phase Change Material » en langue anglaise). Un matériau à changement de phase est une substance présentant une chaleur latente de fusion élevée, c'est-à-dire une substance capable de stocker et restituer une grande quantité de chaleur lors d'un changement de phase.

Cependant, les réservoirs calorifiques de MCP présentent certains inconvénients liés au déplacement du front de solidification qui laisse une épaisseur d'une nouvelle phase solide réduisant les capacités d'échanges thermiques.

Un autre inconvénient est le prix élevé des MCP, par exemple 2€ à 6€ par kilo, ce qui peut être prohibitif quand la serre agricole présente un grand volume à réguler en température.

Enfin, les réservoirs calorifiques ne doivent pas bloquer le rayonnement solaire utile à la photosynthèse. Ainsi dans l'hémisphère nord, les serres bioclimatique classiques doivent être orientées suivant un axe est/ouest avec réservoir calorifique au nord et sont limitées à 10 m de large. Ces systèmes ne sont pas adaptés aux serres multi-chapelles de plus de 10 m de large.

Dans l'hémisphère sud, les réservoirs calorifiques sont positionnés au sud. Dans les climats où l'ensoleillement diffus est dominant en hiver, le mur accumulateur de chaleur bloque une partie de cet ensoleillement diffus, ce qui limite la photosynthèse et engendre du tropisme.

Ainsi, aucun système bioclimatique connu ne permet de répondre simultanément aux exigences suivantes :
- adapté à tout type de serre (tunnel, multi-chapelle) et quelle que soit l'orientation de la serre ;
- simple à mettre en œuvre ;
- économique : sans coût de fonctionnement ;
- robuste ;
- efficace : gagner en précocité grâce aux calories stockées, et réduire le risque de gel ;
- écologique : passif, aucune énergie nécessaire pour fonctionner.

L'invention a notamment pour but de pallier au moins partiellement aux inconvénients précités, en proposant un système passif de régulation thermique pour serre agricole permettant de répondre aux exigences précitées, et de restituer la chaleur ou la fraicheur stockée avec une meilleure homogénéité et une plus faible dépendance aux conditions climatiques extérieures et présentant un coût réduit par rapport à l'art antérieur.

A cet effet, la présente invention a pour objet un système passif de régulation thermique pour serre agricole, comprenant au moins un réservoir absorbeur/diffuseur et accumulateur de chaleur destiné à être exposé (directement ou indirectement) au rayonnement solaire, dans lequel le réservoir comporte une paroi formant un absorbeur de chaleur apte à être chauffé par rayonnement solaire, et un accumulateur de chaleur apte à stocker de l'énergie calorifique absorbée par la paroi, la paroi étant apte à transférer de la chaleur à l'accumulateur, et apte à transférer puis diffuser la chaleur ou la fraicheur de l'accumulateur vers l'extérieur du réservoir.

Un tel système passif de régulation thermique permet notamment aux maraîchers, horticulteurs, pépiniéristes, fraisiculteurs et arboriculteurs produisant sous serres de gagner en précocité, d'allonger la saison automnale et d'augmenter les rendements sans aucun chauffage.

Il permet aussi de conserver davantage leurs serres hors gel. En période diurne chaude, la température de feuille est plus tempérée. Ceci est particulièrement efficace en période de canicule.

Il permet aussi de maintenir le sol plus chaud.

Le dispositif passif de régulation thermique s'installe dans tous types de serres, existantes ou neuves, quelle que soit la taille et l'orientation, que la culture soit en pleine terre, au sol, sur gouttière ou sous tablette.

Le système innovant ne nécessite ni maintenance, ni cout de fonctionnement. Il permet de réduire la consommation énergétique de 50 à 100 kWh/m² suivant la zone géographique et le type de culture.

Suivant d'autres caractéristiques optionnelles du système passif de régulation thermique prises seules ou en combinaison :
- lorsque le réservoir est positionné dans une serre, la paroi possède une surface tournée vers des cultures maximisant le facteur de forme entre ladite surface tournée vers les cultures et une surface des cultures ;
- l'accumulateur de chaleur a une capacité thermique volumique supérieure ou égale à celle de l'eau à l'était liquide ;
- l'accumulateur de chaleur comporte un fluide et/ou un solide ;
- le fluide est choisi seul ou combinaison parmi les fluides suivants : eau, eau contenant des additifs augmentant la capacité thermique massique de l'eau, par exemple des polymères, eau contenant des additifs augmentant les échanges thermiques avec la paroi par exemple des polymères, eau contenant des additifs antigel tels que des sels, biomasse végétale, eau contenant des matériaux à changement de phase ;
- le solide est un solide constitué de matériaux à changement de phases, et/ou de la biomasse végétale ;
- la conductivité thermique de la paroi est supérieure à 0,15 W m-1 K-1 à 20°C ;
- la paroi est réalisée en un matériau sombre ayant un coefficient d'absorption solaire supérieur à 0,7, et/ou la paroi est recouverte d'un revêtement sombre ayant un coefficient d'absorption solaire supérieur à 0,7 ;
- le revêtement est un revêtement solaire choisi parmi les revêtements suivants :
   - peinture solaire ;
   - revêtement en oxyde d'aluminium pigmenté au nickel ;
   - revêtement en sulfure/oxyde de cobalt ;
   - revêtement en chrome noir ;
   - revêtement nickel noir ;
   - revêtement cristal noir ;
   - acier émaillé ;
   - revêtement absorbeur d'humidité.
- la paroi comporte un traitement anti-ultraviolet, tel qu'un revêtement anti-ultraviolet ;
- la paroi est réalisée en un matériau choisi seul ou en combinaison parmi les matériaux suivants : plastique, polyéthylène, polychlorure de vinyle, métal ;
- la paroi comporte au moins une première zone constituée d'un premier matériau, et une seconde zone constituée d'un second matériau, par exemple :
   - la première zone est la partie supérieure du réservoir et le premier matériau est un matériau absorbeur du rayonnement solaire ;
   - la seconde zone est la partie inférieure du réservoir et le second matériau est constituée d'un second matériau isolant thermiquement.
- la paroi forme une gaine souple dont le module d'élasticité est inférieur à 0,7GPa, de préférence égale à 0,02GPa ;
- la gaine souple a une forme sensiblement tubulaire ;
- la gaine souple tubulaire est fermée à ses extrémités par un moyen de pincement, un clip, un nœud, une soudure ou un collage ;
- la gaine souple forme une poche ;
- la gaine souple est réalisée par un procédé de soudure ou collage d'un film, d'un tissu, ou d'une bâche plastique ou par un procédé d'extrusion de matière plastique ;
- la paroi forme un tube rigide ;
- la paroi a une forme sensiblement tubulaire de diamètre compris entre 20cm et 100cm, et de longueur comprise entre 10m et 100m ;
- la paroi a une épaisseur comprise entre 0,3mm et 1cm ;
- l'accumulateur comporte un fluide, et le réservoir comporte un moyen de remplissage en fluide ;
- l'accumulateur comporte un fluide, et le réservoir comporte un moyen de vidange du fluide ;
- le moyen de remplissage et le moyen de vidange constitue un même moyen ;
- le moyen de remplissage et le moyen de vidange sont situés à deux extrémités opposés du réservoir ;
- le moyen de remplissage et/ou le moyen de vidange comporte une ouverture munie d'un bouchon ;
- le moyen de remplissage et/ou le moyen de vidange comporte un raccord du type « raccord pompier » soudé sur la paroi ou sur le bouchon ;
- le moyen de vidange comporte une vanne à régulation de débit ;
- le moyen de vidange comporte un système de modification réversible de la porosité de la paroi, afin que le fluide de l'accumulateur s'écoule lentement hors du réservoir afin de ne pas inonder la serre, ou l'environnement de la serre ;
- le réservoir comporte une ouverture d'évacuation/aspiration d'air ;
- le réservoir est connecté à un système de chauffage de l'accumulateur ;
- le système de chauffage comporte un moyen chauffant, du type chaudière par exemple, apte à chauffer un fluide destiné à être injectée dans le réservoir ;
- le système de chauffage comporte un moyen chauffant, du type chaudière par exemple, apte à chauffer un fluide remplissant un échangeur de chaleur localisé contre le réservoir, de préférence dessous, et apte à échanger de la chaleur avec le réservoir ;
- le réservoir est connecté à un système de refroidissement de l'accumulateur ;
- le système de refroidissement comporte un système d'injection d'eau inférieure à 10°C dans le réservoir ;
- le système de refroidissement comporte un échangeur de chaleur localisé contre le réservoir, de préférence dessous, et apte à échanger de la chaleur avec le réservoir ;
- le système comporte des moyens de fixation du réservoir à un support, tel qu'une tablette portant des plants de culture, une gouttière ou un long-pan ou une travée ;
- le système comporte des moyens de stabilisation au sol de la position du réservoir, tels que des piquets ;
- le système comporte des moyens de guidage de déploiement du réservoir afin de faciliter le déploiement du réservoir ;
- les moyens de guidage de déploiement comportent au moins l'un des moyens suivants pris seul ou en combinaison :
   - des renforts locaux disposés le long d'une soudure de la paroi ;
   - des guides tubulaires destinés à être positionnés au sol ;
   - un renfort longitudinal le long d'une soudure de la paroi.

L'invention concerne également une serre agricole comprenant au moins un système passif de régulation thermique selon l'invention.
Suivant d'autres caractéristiques optionnelles de la serre prises seules ou en combinaison :
- le système passif de régulation thermique est positionné sans occasionner d'ombrage à des cultures de la serre, face au rayonnement solaire, et en vis-à-vis direct avec lesdites cultures, la paroi ayant une surface tournée vers les cultures maximisant un facteur de forme entre ladite surface tournée vers les cultures et une surface des cultures ;
- au moins un réservoir d'un système passif de régulation thermique est positionné sur le sol ;
- une première extrémité du réservoir est plus haute que la seconde extrémité du réservoir ;
- la serre comporte des plants de cultures positionnés sur des tablettes, au moins un réservoir d'un système passif de régulation thermique étant fixé sous au moins une tablette ;
- la serre comporte des gouttières au moins un réservoir d'un système passif de régulation thermique étant fixé sous au moins une gouttière ;
- la serre comporte des long-pans, pignons ou travées, au moins un réservoir d'un système passif de régulation thermique étant fixé le long d'au moins un long-pan, pignon ou une travée ou le long de poteaux intérieurs ;
- le réservoir fixé ne touche pas le sol ;
- le réservoir fixé repose sur le sol ;
- la serre comporte des plants de cultures, et un système passif de régulation thermique est placé de chaque côté des plants ou sur un seul côté ;
- le réservoir contient plusieurs dizaines de litres de fluide accumulateur au mètre carré dans la serre ;
- chaque système passif de régulation thermique posé au sol comporte un ensemble de piquets afin d'éviter un glissement de réservoir ;
- la serre comporte au moins un ventilateur positionné au plafond de la serre, ou sur un support au-dessus des cultures ;
- la serre comporte au moins une sonde pour mesurer la température de l'air ambiant et au moins une sonde pour mesurer la température au sein du réservoir ;
- la serre comporte au moins un système de déshumidification de l'air de la serre.

La présence de systèmes passifs de régulation thermique dans la serre réduit l'écart de température entre le jour et la nuit, ce qui permet de réduire le risque de gel et donc de planter beaucoup plus tôt en terre. Grâce à cette technique, la température de feuille est jusqu'à 4°C de plus que dans une serre classique pendant les périodes non ensoleillées. Les essais ont montré jusqu'à 1 mois de précocité et 5% de rendement en plus. L'investissement est également moindre que pour des serres classiques équipées de système de régulation actifs ou passifs selon l'art antérieur.

Comme expliqué précédemment, les réservoirs calorifiques ne doivent pas bloquer le rayonnement solaire utile à la photosynthèse, ce qui implique des orientations précises pour les serres bioclimatiques classiques et leurs accumulateurs de chaleur.

Or par rapport aux serres bioclimatiques connues, le système passif de régulation thermique selon l'invention s'intègre :
- dans tous types de serres : tunnel, multi-chapelle, serre Venlo, grande portée ;
- sans contraintes d'orientation ;
- en construction ou rénovation ;
- en pleine terre (le long des rangs de culture), au sol, sur gouttière ou sous tablette ;
- en auto-installation.

### Brève description des figures

L'invention sera mieux comprise à la lecture de la description qui va suivre donnée uniquement à titre d'exemple et faite en se référant aux dessins annexés dans lesquels :
[Fig. 1] la figure 1 est une vue schématique en coupe d'une serre agricole comprenant un système passif de régulation thermique selon l'invention.
[Fig. 2] la figure 2 est une vue schématique d'un système passif de régulation thermique selon l'invention.
[Fig. 3] la figure 3 illustre un ensemble de quatre réservoirs, chacun étant muni d'un moyen de remplissage en fluide et d'un moyen de vidange d'un fluide de l'accumulateur de chaleur.
[Fig. 4] la figure 4 est un ensemble de figures, figures 4A à 4F, dans lequel :
   - la figure 4A illustre un système passif de régulation thermique comportant un réservoir muni d'un moyen de remplissage en fluide, un moyen de vidange du fluide plus haut que le moyen de remplissage, et un système d'évacuation/aspiration d'air (dégazage), dans lequel le remplissage se fait sous pression.
   - la figure 4B illustre le système passif de régulation thermique de la figure 4A, dans lequel la vidange se fait également sous pression.
   - la figure 4C illustre un système passif de régulation thermique comportant un réservoir muni d'un moyen de remplissage en fluide, un moyen de vidange du fluide plus bas que le moyen de remplissage, et un système d'évacuation/aspiration d'air (dégazage), dans lequel le remplissage se fait sans pression.
   - la figure 4D illustre le système passif de régulation thermique de la figure 4C, dans lequel la vidange se fait également sans pression.
   - la figure 4E illustre le remplissage du réservoir , selon une variante de réalisation, dans laquelle les deux extrémités sont surélevées, en étant rapportées sur des piquets.
   - la figure 4F illustre la vidange du réservoir, selon la variante de réalisation de la figure 4E.
[Fig. 5] la figure 5 illustre un système passif de régulation thermique dans lequel le réservoir comporte une ouverture fermée par un bouchon.
[Fig. 6A] la figure 6A illustre un moyen de vidange du fluide muni d'une vanne à régulation de débit.
[Fig. 6B] la figure 6B illustre un moyen de vidange du fluide muni d'un système de modification réversible de la porosité de la paroi du réservoir
[Fig. 7A] la figure 7A une vue schématique en coupe d'une serre agricole comprenant un système de chauffage de l'accumulateur du réservoir.
[Fig. 7B] la figure 7B est une vue de dessus du schéma de la figure 7A.
[Fig. 8A] la figure 8A une vue schématique en coupe d'une serre agricole comprenant un système de refroidissement de l'accumulateur du réservoir.
[Fig. 8B] la figure 8B est une vue de dessus du schéma de la figure 8A.
[Fig. 9A] la figure 9A une vue schématique en coupe d'une serre agricole comprenant un système de stabilisation du réservoir.
[Fig. 9B] la figure 9B est une vue de dessus du schéma de la figure 9A.
[Fig. 10A] la figure 10A illustre un système passif de régulation thermique comportant des moyens de guidage de déploiement du réservoir, formant des renforts de soudure disposés à intervalle régulier.
[Fig. 10B] la figure 10B illustre un système passif de régulation thermique comportant un moyen de guidage de déploiement du réservoir, formant un renfort longitudinal le long de la gaine souple.
[Fig. 11A] la figure 11A illustre un exemple dans lequel le réservoir est une gaine souple de forme tubulaire posée sur le sol dans un tunnel, entre deux plants.
[Fig. 11B] la figure 11B illustre un exemple dans lequel le réservoir est une gaine souple de forme tubulaire posée sur le sol dans un tunnel, sous des tablettes
[Fig. 11C] la figure 11C illustre un exemple dans lequel le réservoir est une gaine souple de forme tubulaire posée sur le sol dans une multi-chapelle.
[Fig. 12A] la figure 12A illustre un exemple dans lequel le réservoir est un tube rigide posé sur le sol dans un tunnel, entre deux plants.
[Fig. 12B] la figure 12B illustre un exemple dans lequel le réservoir est un tube rigide posé sur le sol dans un tunnel, sous des tablettes.
[Fig. 12C] la figure 12C illustre un exemple dans lequel le réservoir est un tube rigide posé sur le sol dans une multi-chapelle.
[Fig. 13A] la figure 13A illustre un exemple dans lequel le réservoir est une gaine souple en forme de poche fixée et suspendue à une gouttière.
[Fig. 13B] la figure 13B illustre un exemple dans lequel le réservoir est une gaine souple en forme de poche fixée à une gouttière, et reposant sur le sol.
[Fig. 14A] la figure 14A illustre un exemple dans lequel le réservoir est une gaine souple en forme de poche fixée et suspendue à une paroi ou une travée de la serre 200 (suivant un axe Est/Ouest).
[Fig. 14B] la figure 14B illustre un exemple dans lequel le réservoir est une gaine souple en forme de poche fixée à une paroi ou une travée de la serre 200, et reposant sur le sol (suivant un axe Est/Ouest).
[Fig. 15A] la figure 15A illustre les échanges thermiques en période diurne (stockage).
[Fig. 15B] la figure 15B illustre les échanges thermiques en période nocturne (déstockage).

Sur ces figures, les éléments identiques portent les mêmes numéros de référence.

### Description détaillée

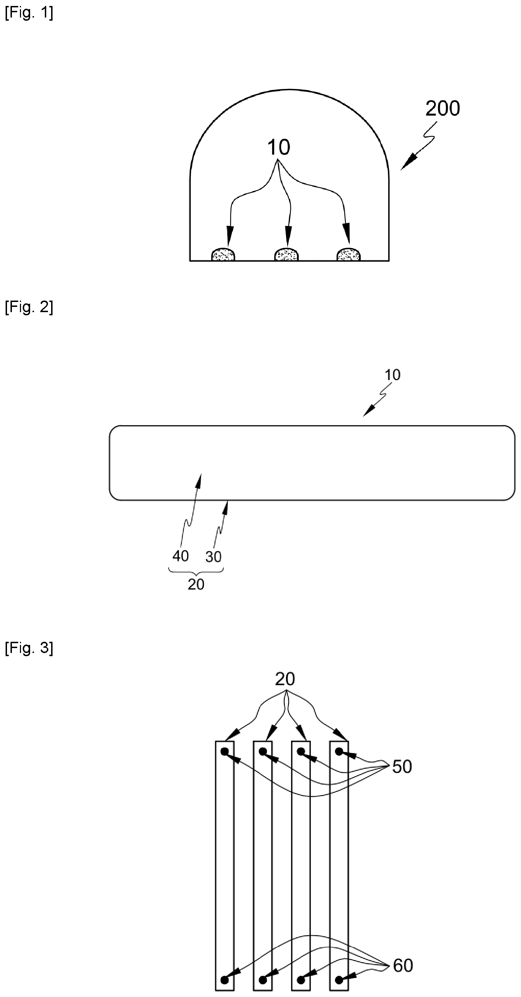

On a représenté sur la figure 1 un exemple d'une serre agricole 200 munie d'un système passif de régulation thermique 10 selon un exemple de réalisation de l'invention.

Un système passif de régulation thermique est un système permettant de chauffer ou refroidir les cultures d'une serre sans nécessité un apport énergétique. On entend par culture, toute espèce végétale cultivée : plantes, fleurs, légumes, fruits,...

Un exemple d'un tel système passif de régulation thermique 10 est décrit ci-après, en référence à la figure 2. Le système passif de régulation thermique 10 comprend au moins un réservoir 20 absorbeur/diffuseur et accumulateur de chaleur destiné à être exposé directement ou indirectement (le rayonnement solaire chauffe l'air de la serre, qui chauffe par convection le système 10) au rayonnement solaire.

Ce réservoir 20 est apte à absorber l'énergie d'un rayonnement solaire, à accumuler cette énergie sous forme de chaleur pendant le jour, et à diffuser cette chaleur hors du réservoir pendant la nuit ou lors de séquences nuageuses.

Le réservoir 20 comporte une paroi 30 formant un absorbeur de chaleur apte à être chauffé par rayonnement solaire, et un accumulateur 40 de chaleur apte à stocker de l'énergie calorifique absorbée par la paroi 30.

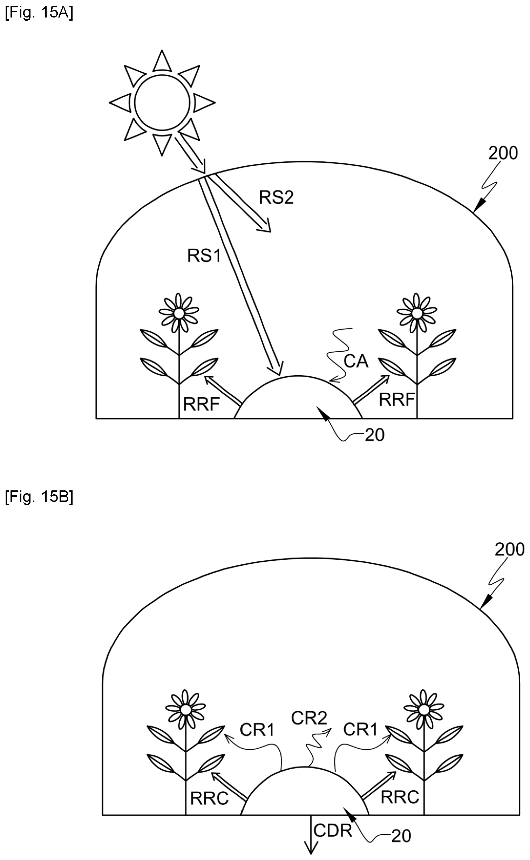

La paroi 30 est ainsi apte à transférer de la chaleur à l'accumulateur 40 dans certaines conditions, notamment lorsque la température extérieure au réservoir 20 est supérieure à celle de l'intérieur du réservoir 20. La paroi 30 est apte à rafraichir (figure 15A) les cultures lorsque la température extérieure au réservoir 20 est supérieure à celle de l'intérieur. Enfin, la paroi 30 est aussi apte à transférer puis diffuser la chaleur de l'accumulateur 40 vers l'extérieur du réservoir 20 pour chauffer (figure 15B) les cultures lorsque la température extérieure au réservoir 20 est inférieure à celle de l'intérieur.

La figure 15A illustre les échanges thermiques en période diurne (stockage), période au cours de laquelle se produit un stockage de chaleur dans le réservoir 20 par rayonnement (RS1), mais aussi par convection (CA), ainsi qu'un rafraichissement des cultures par rayonnement (RRF). En effet, le rayonnement solaire chauffe directement (RS2) l'air de la serre (effet de serre), et également par rayonnement (RS1) la paroi 30 du réservoir 20. L'air de la serre chauffe à son tour par convection (CA) le réservoir 20. Le stockage de chaleur est donc le résultat d'une absorption de chaleur par rayonnement et par convection. Par ailleurs, la paroi 30 du réservoir étant plus froide que les cultures, le réservoir rafraichît les cultures par rayonnement (RRF).

La figure 15B illustre les échanges thermiques en période nocturne (déstockage), période au cours de laquelle se produit un déstockage de chaleur du réservoir 20 par rayonnement, conduction et convection. En effet, le réservoir 20 chauffe par rayonnement (RRC) les cultures, et également par convection (CR2) l'air de la serre. L'air chauffé de la serre, entre le réservoir (20) et les cultures chauffe par convection (CR1) les cultures. Enfin, le réservoir 20 chauffe également le sol par conduction (CDR).

### Caractéristiques de l'accumulateur 40

L'accumulateur 40 de chaleur a de préférence une capacité thermique volumique supérieure ou égale à celle de l'eau à l'était liquide (4185 kJ.K⁻¹.m³). Il comporte un fluide, tel que de l'eau, ou un solide, tel qu'un solide constitué de matériaux à changement de phases, ou de la biomasse végétale solide. Il peut également comporter simultanément différents solides et différents fluides.

Le fluide peut être de différente nature. Toutefois, ce fluide doit facilement capter la chaleur absorbée par la paroi 30 lorsque celle-ci est chauffée par rayonnement solaire, et doit facilement transmettre sa chaleur à la paroi 30 en période nocturne.

Le fluide caloporteur est donc choisi parmi les fluides ayant une grande capacité d'échange thermique avec le matériau constituant la paroi 30, et ayant une grande capacité thermique massique, par exemple avec du polyéthylène (PE) ou du polychlorure de vinyle (PVC).

Le fluide de l'accumulateur 40 est avantageusement choisi seul ou en combinaison parmi les fluides suivants :
- eau ;
- eau contenant des additifs augmentant la capacité thermique massique de l'eau par exemple des polymères ;
- eau contenant des additifs augmentant les échanges thermiques avec la paroi 30 par exemple des polymères ;
- biomasse végétale liquide ;
- eau avec des matériaux à changement de phase, mélangé à l'eau ou séparé (par exemple sous la forme de billes, ellipses ou cylindres) et
- eau contenant des additifs antigel tels que des sels.

Selon un mode de réalisation avantageux, le fluide caloporteur est l'eau. En effet, l'eau peut être libérée du réservoir 20, directement sur le terrain, sans risque de pollution des sols ou dans le système d'irrigation, et permettant une irrigation des cultures.

Si le fluide est un fluide ne pouvant être déversé sur le sol, alors le système 10 comporte un bassin de récupération du fluide.

### Matériau formant la paroi 30

Afin d'avoir une aptitude suffisante à transférer la chaleur avec l'accumulateur 40, la conductivité thermique de la paroi 30 est supérieure à 0,15 W m⁻¹ K⁻¹ à 20°C pour une épaisseur inférieure à 1 cm.

Par ailleurs, la paroi 30 est réalisée dans un matériau résistant à la chaleur à l'intérieur d'une serre, et à l'échauffement généré par les radiations solaires c'est-à-dire que la paroi 30 préserve ses qualités d'échange thermiques même par de fortes températures au sein de la serre (taille de la surface d'échange, capacité de la paroi à transmettre/recevoir la chaleur à/de l'accumulateur 40, capacité à absorber les rayonnements solaires).

Ainsi, la paroi 30 est avantageusement réalisée en un matériau choisi seul ou en combinaison parmi les matériaux suivants : polyéthylène (PE), polychlorure de vinyle (PVC), autres plastiques ou métal.

Afin d'améliorer la capacité de la paroi 30 à absorber la chaleur de rayonnement solaire, la paroi 30 est réalisée en un matériau sombre, de préférence noir, vert, bleu ou gris foncé, et/ou la paroi 30 est recouverte d'un revêtement sombre, de préférence noir, vert, bleu ou gris foncé. On appelle sombre une couleur dont le coefficient d'absorption solaire est supérieur à 0,7. Le coefficient d'absorption solaire d'une surface exprime, par un nombre compris en 0 et 1, le pourcentage de l'énergie radiante incidente absorbé par cette surface.

Le revêtement peut être un revêtement solaire choisi parmi les revêtements suivants :
- peinture solaire (sélective ou non) ;
- revêtement en oxyde d'aluminium pigmenté au nickel ;
- revêtement en sulfure/oxyde de cobalt ;
- revêtement en chrome noir ;
- revêtement nickel noir ;
- revêtement cristal noir ;
- acier émaillé ;
- revêtement absorbeur d'humidité.

Selon une variante de réalisation, le revêtement comporte un traitement ou revêtement anti-ultraviolet afin de prolonger la durée de vie de la paroi 30.

Selon l'invention, la paroi 30 est suffisamment robuste pour être capable de résister (ne pas s'altérer, se percer) à des objets tels que des petits cailloux, des épines, des ravageurs, des chocs..., et pour ne pas diminuer l'ergonomie de l'utilisateur de la serre : par exemple, le maraicher peut poser son genou dessus pour travailler les légumes par exemple.

Ainsi, selon un premier mode de réalisation, la paroi 30 forme une gaine souple, dont le module d'élasticité est préférentiellement inférieur à 0,7GPa, de préférence sensiblement égale à 0,02GPa.

Une telle gaine souple peut être réalisée par un procédé de soudure d'un film, d'un tissu, d'une bâche plastique (en polyéthylène (PE) ou en polychlorure de vinyle (PVC) par exemple), tel qu'un procédé de soudure par haute fréquences, un procédé de soudure thermique (par application directe de chaleur), ou encore un procédé de soudure par ultrason.

Une telle gaine souple peut être réalisée par un procédé de collage d'un film, d'un tissu, d'une bâche plastique (en polyéthylène (PE) ou en polychlorure de vinyle (PVC) par exemple).

De façon avantageuse la gaine souple est réalisée par un procédé d'extrusion. Selon ce procédé, aucune soudure n'est nécessaire dans la longueur de la gaine, offrant un réservoir 20 plus robuste mécaniquement.

Selon un mode de réalisation, la paroi 30 comporte différentes zones, chaque zone étant formée de matériaux différents, les matériaux étant choisis pour améliorer la fonction de la zone. Ainsi, selon une variante de réalisation, la paroi 30 comporte au moins une première zone constituée d'un premier matériau, et au moins une seconde zone constituée d'un second matériau. Selon cette variante, la première zone est la partie supérieure du réservoir 20, et la seconde zone est la partie inférieure (tournée/posée vers/sur le sol) du réservoir 20.

Par exemple, le second matériau constituant la partie inférieure est un matériau isolant thermiquement (PVC muni d'une mousse isolante thermiquement par exemple), de façon à ce que la chaleur de l'accumulateur soit émise la nuit sur la partie aérienne supérieure et non vers le sol. De même, le premier matériau constituant la partie supérieure est choisi pour avoir de très bonnes propriétés d'absorption du rayonnement solaire ou d'émission, meilleures que le second matériau. Selon ce mode de réalisation, le réservoir 20 comporte alors deux soudures. D'une manière générale, le système peut être composé de différents matériaux sur sa circonférence par rapport à l'absorption diurne du gain solaire, le chauffage radiatif vers les cultures, la résistance aux chocs, les pertes thermiques vers le sol.

Selon un mode de réalisation, la paroi 30 est une paroi multicouche. Chaque couche peut avoir des propriétés différentes : absorption du rayonnement solaire, résistance au choc, facilité de collage... Selon un exemple, la paroi 30 est formée :
- D'une première couche interne : cette couche a pour fonction de favoriser l'étanchéité du réservoir 20, et de faciliter la soudure/le collage de la paroi 30 pour former un tube ou une poche. Cette couche peut avantageusement être un PVC lisse, laqué ou enduit de colle afin d'évite de souder la couche externe.
- D'une seconde couche externe : cette couche a pour fonction de favoriser la captation du rayonnement solaire, et d'offrir une résistance mécanique permettant d'éviter notamment le perçage du réservoir 20. Cette couche peut avantageusement être un tissu de PVC ou PE avec facultativement un traitement anti UV.

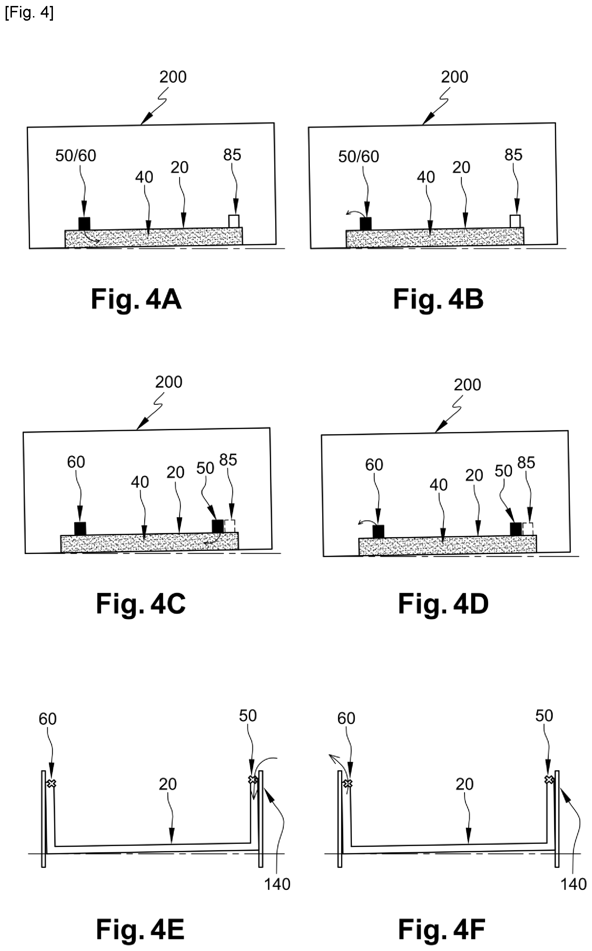

Selon un exemple de réalisation de ce premier mode de réalisation, la gaine souple a une forme sensiblement tubulaire, fermée à ses extrémités par pincement, clip, nœud ou soudure, et destinée à être posée sur le sol. Le nœud peut être réalisé soit directement avec la gaine souple, soit avec un moyen du type ficelle, cordelette, sangle (avantageux pour le mode de réalisation des figures 4E et 4F par exemple).

Selon un autre exemple de réalisation de ce premier mode de réalisation, la gaine souple forme une poche destinée à être fixée à un élément de serre, suspendue ou reposant sur le sol.

L'avantage d'une gaine ou d'une poche souple est que ce type de réservoir 20 peut être vidé facilement (pression sur la paroi souple), puis facilement rangé/enroulé et déplaçable suivant les cycles de culture.

### Exemple 1 de réalisation :

Le réservoir 20 est constitué d'une paroi 30 réalisée en LAC640^{®} (SAINT CLAIR TEXTILES ^{®}, France). Le tissu LAC640^{®} est un tissu enduit de PVC 640 g/m² laqué double face qui possède une excellente soudabilité. Une description de ce produit est disponible dans le document suivant : https://www.saintclairtextiles.com/produit/lac-640/

Les caractéristiques principales sont reprises dans le tableau 1 suivant :

**[Tableau 1]**

| **Caractéristiques** | **Valeurs** | | **Unités** | **Normes** |
|---|---|---|---|---|
| | Chaîne | Trame | | |
| **Caractéristiques générales** | | | | |
| Support | 1100 dTex PES HT | | | |
| | 990 den | | | |
| Enduction | PVC Lowick enduction 2 faces | | | |
| Finition | Cleangard double face | | | |
| Poids | 640 | | g/m² | ISO 3801 |
| Laize | 150 250 250 300 300 | | cm | |
| Longueur de rouleau | 60 60 250 60 250 | | ml | |

| **Résistance du tissu** | | | | |
|---|---|---|---|---|
| Résistance à la rupture | 220 | 210 | daN/5cm | NF EN ISO 1421 |
| Résistance déchirure | 30 | 25 | daN | DIN 53.363 |
| Adhérence | 8 | | daN/5cm | NF EN ISO 2411 |
| Tenue au froid | -30 | | °C | NF EN 1876-2 |
| Tenue à la chaleur | 70 | | °C | (24h) |
| Résistance au feu | < 100 | | mm/min | DIN 75 200 |

### Exemple 2 de réalisation :

Le réservoir 20 est constitué d'une paroi 30 réalisée en une couche externe de tissu en polyéthylène (non toxique et recyclable), et une couche interne lisse favorisant la soudure et le collage. La couche externe est recouverte d'un revêtement anti-ultraviolet.

### Forme de la paroi 30

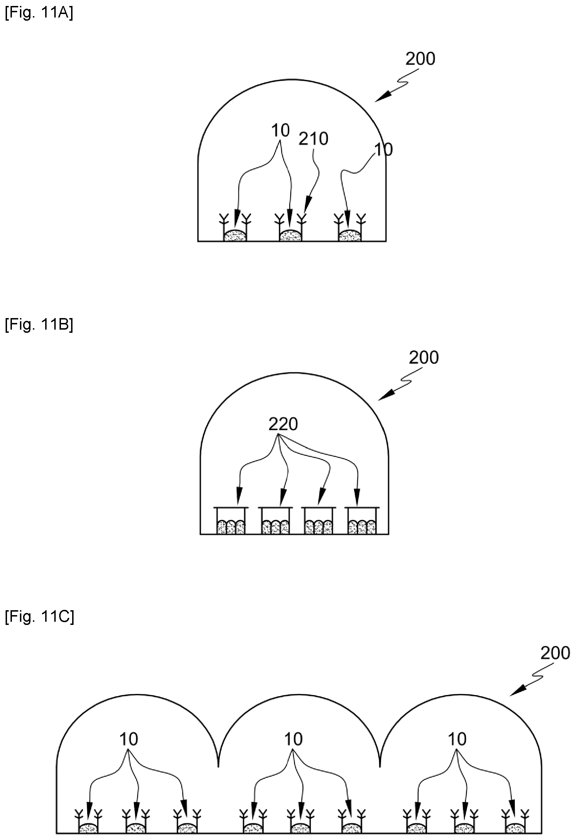

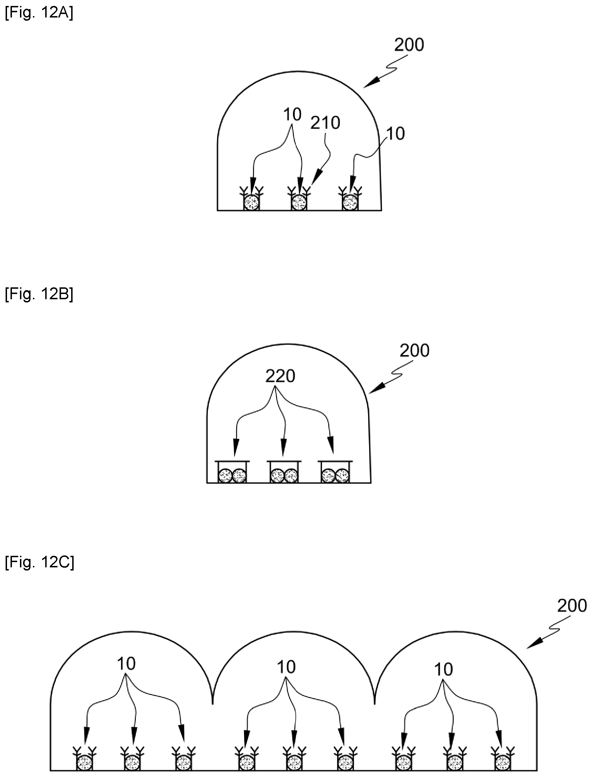

Selon un mode de réalisation préféré, le réservoir 20 forme un tube, souple (figures11A à 11C par exemple) ou rigide (figures 12A à 12C par exemple), dont le diamètre est compris entre 20cm et 100cm, et dont la longueur est comprise entre 10m et 100m, et la paroi 30 a une épaisseur comprise entre 0.3mm et 1cm. Une épaisseur faible permet un meilleur échange thermique mais au détriment de la robustesse, notamment au détriment à la résistance mécanique à des objets tels que des petits cailloux, ou l'application d'une force par l'utilisateur.

Toutefois, la longueur du tube est avantageusement adaptée à la pente du terrain sur lequel il est posé. Ainsi, suivant la configuration de la serre et la pente du terrain, la longueur pourra être dans certains cas inférieure à 10m ou supérieure à 100m. De même suivant le type de culture, le diamètre pourra être dans certains cas inférieure à 20cm ou supérieure à 100cm.

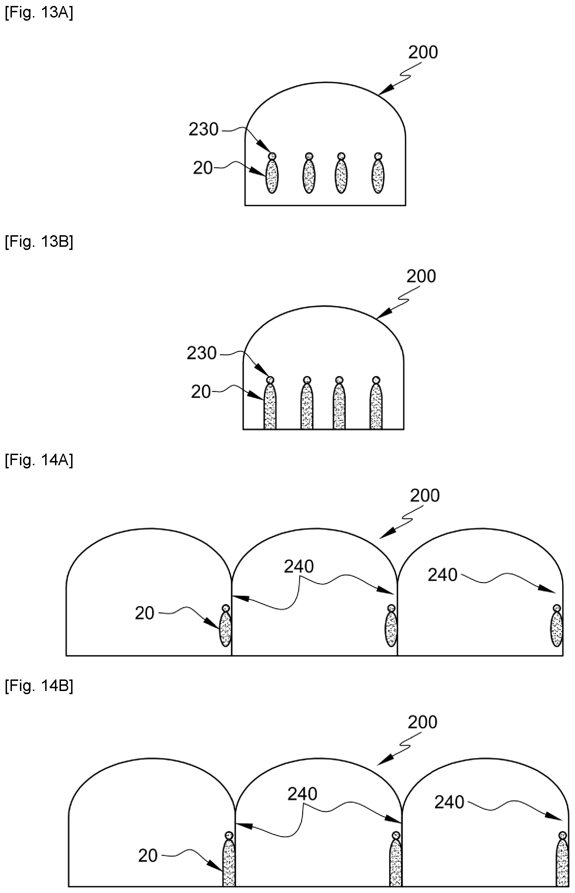

Selon un autre mode de réalisation, le réservoir 20 forme une poche souple, comme illustré sur les figures 13A à 14B.

De façon générale, le réservoir 20 permet un rayonnement thermique directe par infrarouge lointain sur les cultures grâce à un facteur de forme élevé. On appelle « facteur de forme » la part du rayonnement thermique, émis par une surface (la paroi 30), qu'une autre surface reçoit ; dans le cas des cultures, c'est la part du rayonnement émis par la paroi 30 qui est reçue par la surface des cultures, par exemple la surface formée par le feuillage exposé vers la paroi 30.

Ainsi, en période d'absence (nuit) ou de limitation (nuage) de soleil, le réservoir 20 rayonne de la chaleur directement sur les cultures. De ce fait, la température des cutures est supérieure à celle de l'air ambiant.

De la même façon, le positionnement du réservoir 20 permet également un rafraîchissement diurne si nécessaire : en période diurne chaude, la température de feuille des cultures est plus tempérée grâce au système 10 selon l'invention. Ceci est particulièrement efficace en période de canicule. En effet, pendant ces périodes, le réservoir 20 est plus froid que l'air ambiant sous la serre. Le réservoir 20 rayonne alors de la fraicheur directement vers les cultures, car le réservoir 20 est située en regard de ces cultures. Ainsi, la température des cutures est inférieure à celle de l'air ambiant.

### Equipements de remplissage/vidange du réservoir 20 (figures 3 et 4A à 4D)

Lorsque l'accumulateur 40 comporte un fluide, le réservoir 20 comporte un moyen de remplissage 50 en fluide et de préférence un moyen de vidange 60 du fluide. Un tel moyen de vidange 60 est avantageusement activé en fin de saison froide (par exemple à la fin de l'hiver en France). La figure 3 illustre un ensemble de quatre réservoir 20, chacun étant muni d'un moyen de remplissage 50 en fluide et d'un moyen de vidange 60 du fluide.

Le réservoir 20 peut également comporter un système 85 d'évacuation/aspiration d'air, pour le dégazage de l'air lors du remplissage par le fluide, ou pour faire entrer l'air lors de la vidange du réservoir 20 (figures 4A à 4F).

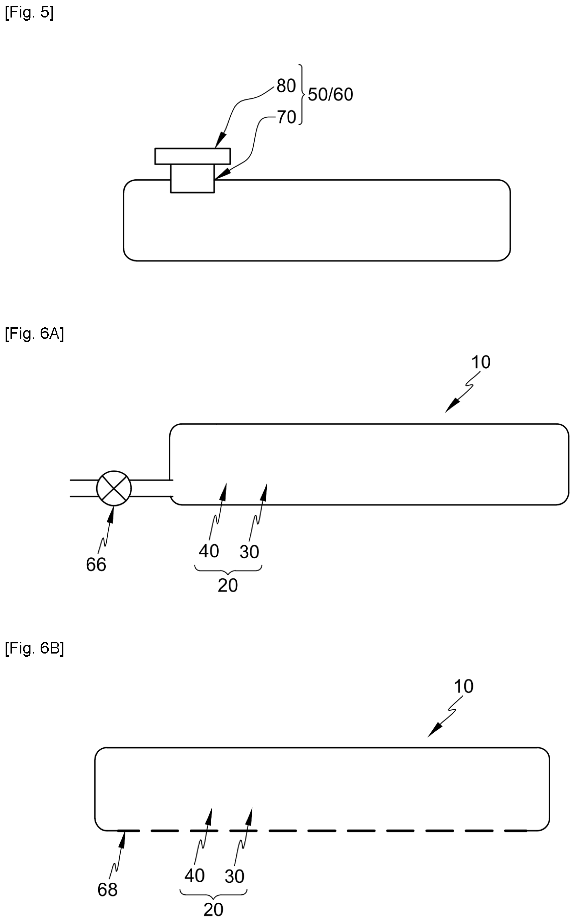

Selon un mode de réalisation, le moyen de remplissage 50 et le moyen de vidange 60 constitue un même moyen (figures 4A et 4B), par exemple une ouverture 70 munie d'un bouchon 80 (figure 5).

Selon un autre mode de réalisation, au contraire, le moyen de remplissage 50 et le moyen de vidange 60 sont deux moyens distincts (figures 4C à 4F). Par exemple, ils peuvent être avantageusement situés à deux extrémités opposées du réservoir 20. Dans ce cas, et avantageusement, le moyen de remplissage 50 est positionné à une première extrémité du réservoir 20 destinée à être positionnée plus haut que la seconde extrémité du réservoir 20, cette dernière portant le moyen de vidange 60 (figures 4C à 4F). Une telle configuration facilite le remplissage, et facilite la vidange. A l'inverse (non illustré), il est possible d'utiliser des moyens de pompage, permettant d'inverser les positions des moyens de remplissage 50 et de vidange 60.

L'ouverture (85) d'évacuation/aspiration d'air peut être le système de remplissage ou celui de vidange. Un seul system d'ouverture (85) d'évacuation/aspiration d'air, remplissage et vidange est aussi possible

Selon un exemple de réalisation, le moyen de remplissage 50 et/ou le moyen de vidange 60 comporte une ouverture 70 munie d'un bouchon 80 (figure 5). Avantageusement, le moyen de remplissage 50 et/ou le moyen de vidange 60 comporte un raccord du type « raccord pompier » soudé sur la paroi 30 ou sur le bouchon 80. Avantageusement, le moyen de remplissage 50 et/ou le moyen de vidange 60 comporte une pompe apte à injecter ou extraire le fluide dans ou du réservoir 20.

Par ailleurs, lorsque la gaine ou la poche souple est fermée avec des clips ou par des nœuds, au niveau de l'extrémité haute, le clip ou le nœud est ouvert pour le remplissage et refermée après. Les extrémités sont surélevées des deux côtés (avec un piquet ou une barre par exemple - figures 4E et 4F) pour que le fluide ne s'écoule pas.

Selon un exemple de réalisation, le remplissage 50 peut se faire directement en enlevant les bouchons.

La vidange du réservoir 20 peut aussi se faire par gravité, notamment lorsque le réservoir est suspendu, ou repose sur le sol.

Les figures 4A et 4B illustrent un système 10 passif de régulation thermique comportant un réservoir 20 muni d'un unique moyen 50/60 de remplissage/vidange en fluide : les moyens 50 et 60 ne forme qu'un seul moyen. Le réservoir 20 de ce système est avantageusement posé sur un sol comportant un dénivelé, de sorte qu'une extrémité du réservoir est plus basse que l'autre. Comme illustré sur les figures 4A et 4B l'extrémité portant le moyen 50/60 est positionnée plus bas que l'autre extrémité. Dans cette configuration du système 10, l'autre extrémité du réservoir 20 (positionnée plus haut) comporte un système 85 d'évacuation/aspiration d'air, pour le dégazage de l'air lors du remplissage par le fluide (figure 4A), ou pour faire entrer l'air lors de la vidange du réservoir 20 (figure 4B).

Les figures 4C et 4D illustrent un système 10 passif de régulation thermique comportant un réservoir 20 muni d'un moyen de remplissage 50 et d'un moyen distinct de vidange 60. Le réservoir 20 de ce système est avantageusement posé sur un sol comportant un dénivelé, de sorte qu'une extrémité du réservoir est plus basse que l'autre. Comme illustré sur les figures 4C et 4D l'extrémité portant le moyen de vidange 60 est positionnée plus bas que l'autre extrémité. Dans cette configuration du système 10, l'autre extrémité du réservoir 20 (positionnée plus haut) comporte le moyen de remplissage 50. Dans cette configuration du système 10, le remplissage par le fluide se fait aisément et sans pression (figure 4C), et la vidange du fluide se fait également aisément et sans pression (figure 4D). Selon cet exemple, et de façon facultative, l'extrémité portant le moyen de remplissage 50 peut comporter un système 85 d'évacuation/aspiration d'air.

Les figures 4E et 4F illustrent un système 10 passif de régulation thermique comportant un réservoir 20 muni d'un moyen de remplissage 50 et d'un moyen distinct de vidange 60. Le réservoir 20 de ce système est avantageusement posé sur un sol comportant un dénivelé, de sorte qu'une extrémité du réservoir est plus basse que l'autre. Comme illustré sur les figures 4E et 4F l'extrémité portant le moyen de vidange 60 est positionnée plus bas que l'autre extrémité. Dans cette configuration du système 10, l'autre extrémité du réservoir 20 (positionnée plus haut) comporte le moyen de remplissage 50. Dans cette configuration du système 10, le remplissage par le fluide se fait aisément et sans pression (figure 4E), et la vidange du fluide se fait également aisément et sans pression (figure 4F). Selon cet exemple, et de façon facultative, l'extrémité portant le moyen de remplissage 50 peut comporter un système 85 d'évacuation/aspiration d'air. Selon cet exemple, chaque extrémité du réservoir 20 est surélevée le long d'un piquet 140, et y est rapportée (par exemple attachée avec une ficelle, cordelette, sangle, ...). Chaque extrémité peut être fermée par un système simple (moins de pression que lorsque le réservoir est à plat), telle qu'un nœud, un clip ou une ficelle par exemple, afin de pouvoir être alternativement ouverte et fermée.

Selon un mode de réalisation, le moyen de vidange 60 est équipé d'un dispositif apte à contrôler le débit de vidange. Par exemple afin de laisser le temps au sol d'absorber le fluide, lorsque le fluide est de l'eau. Ainsi, selon un exemple, le moyen de vidange 60 comporte une vanne 66 à régulation de débit (figure 6A). Selon un autre exemple, le moyen de vidange 60 comporte un système 68 (figure 6B) de modification réversible de la porosité de la paroi 30, afin que le fluide de l'accumulateur 40 s'écoule lentement hors de du réservoir 20 afin de ne pas inonder la serre 200, ou l'environnement de la serre 200. De préférence ce système se répartit sur sensiblement toute la longueur du réservoir 20 (figure 6B). Par exemple, le réservoir 20 comporte à sa base une crépine à ouverture variable et pilotable.

Selon une variante de réalisation (figure 4A à 4D), le réservoir 20 comporte une seconde ouverture 85, dite ouverture d'évacuation/aspiration d'air, pour le dégazage de l'air lors du remplissage par le fluide ou pour faire entrer l'air lors de la vidange du réservoir 20. Cette seconde ouverture permet d'évacuer, respectivement aspirer, l'air lors du remplissage, respectivement vidange, du réservoir. Cette seconde ouverture est fermée par un bouchon, dit bouchon dégazeur.

### Equipements d'amélioration du rendement du réservoir

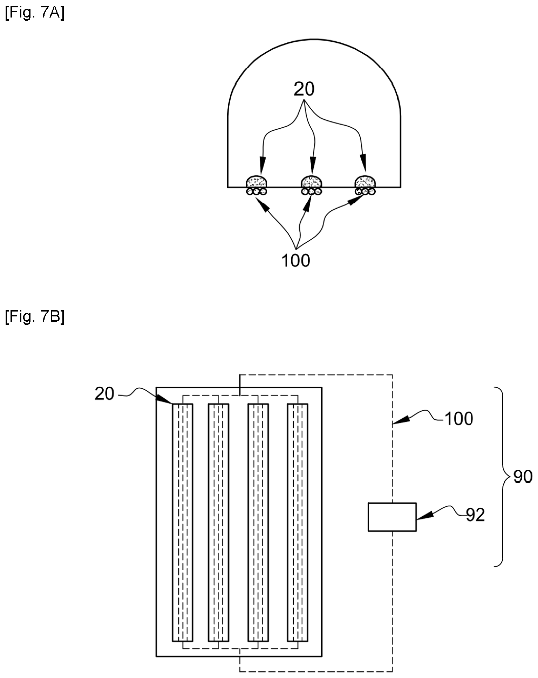

Selon un mode de réalisation (figures 7A, 7B), le réservoir 20 est connecté à un système de chauffage 90 de l'accumulateur 40. Un tel système permet de palier un manque d'ensoleillement ou une température extérieure trop faible pour conserver une température constante et homogène dans la serre 200.

Le système de chauffage 90 comporte un dispositif chauffant 92, du type chaudière, géothermique par exemple, apte à chauffer un fluide, tel que de l'eau.

Selon un exemple de réalisation (non représenté), ce fluide chaud (par exemple 45°C) est destiné à être injecté dans le réservoir 20, en remplacement du fluide pas assez chaud présent dans le réservoir 20.

Selon un autre exemple de réalisation (figures 7A et 7B), ce fluide est destiné à être injecté dans un échangeur de chaleur 100, par exemple un ensemble de tubes, localisé contre (en contact de) la paroi 30 du réservoir 20, de préférence dessous, et apte à échanger de la chaleur avec cette paroi 30.

Dans ces deux cas, le système de chauffage 90, qui permet également de stocker une grande quantité de chaleur comme un ballon d'eau chaude, permet de baisser la puissance de la chaudière par rapport à une installation conventionnelle.

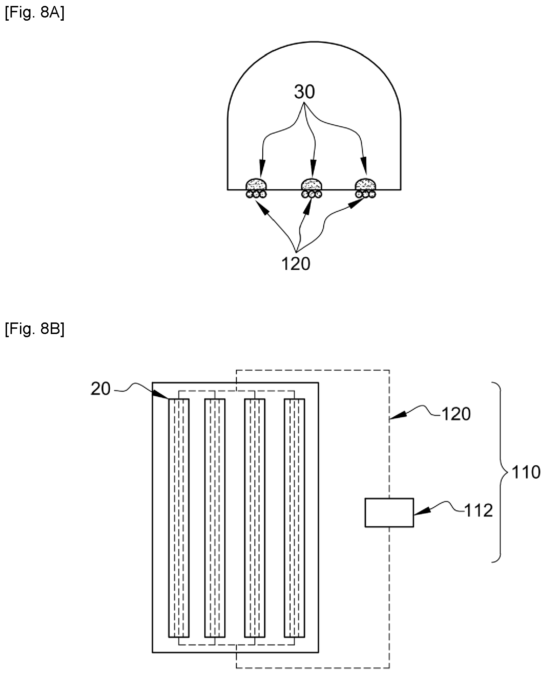

Selon un mode de réalisation, le réservoir 20 est connecté à un système de refroidissement 110 de l'accumulateur 40 (figures 8A, 8B).

Le système de refroidissement 110 comporte un moyen de récupération 112 d'eau glacée ou froide (température inférieure à 10°C par exemple), provenant par exemple d'un groupe froid, ou comporte un dispositif de refroidissement, apte à refroidir un fluide, tel que de l'eau.

Selon un exemple de réalisation (non représenté), ce fluide froid (température inférieure à 10°C), est destiné à être injecté dans le réservoir 20, en remplacement du fluide trop chaud présent dans le réservoir 20.

Selon un autre exemple de réalisation (figures 8A et 8B), ce fluide froid est destiné à être injecté dans un échangeur de chaleur 120, par exemple un ensemble de tubes, localisé contre (en contact de) la paroi 30 du réservoir 20, de préférence dessous, et apte à échanger de la chaleur avec cette paroi 30.

### Equipements de fixation/stabilisation du réservoir

Selon un mode de réalisation, le système passif de régulation thermique 10 comporte des moyens de fixation (non représenté) du réservoir 20 à un support, tel qu'une tablette portant des plants de culture, une gouttière ou un long-pan ou une travée.

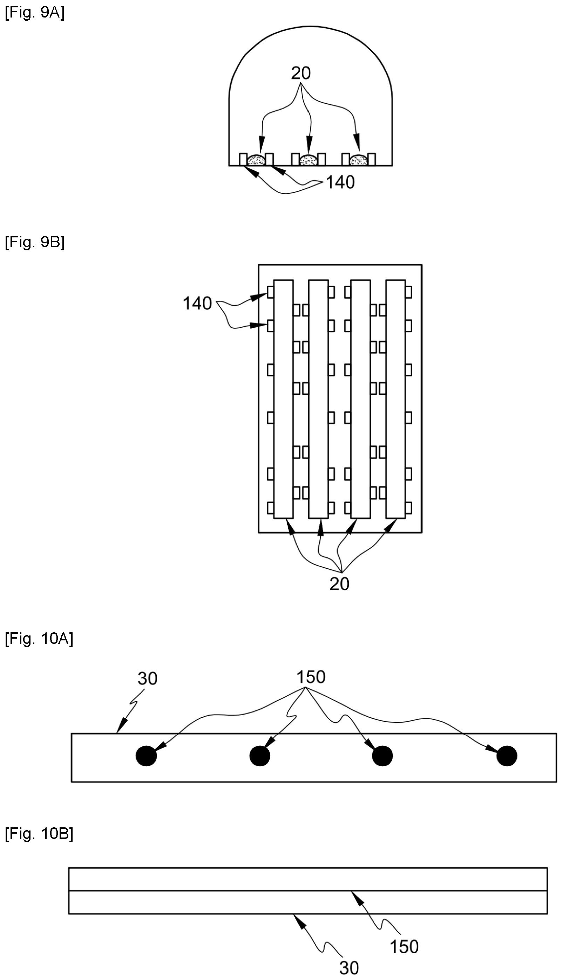

Selon un mode de réalisation (figures 9A et 9B), le système passif de régulation thermique 10 comporte des moyens de stabilisation 140 au sol de la position du réservoir 20, tels que des piquets. Ces piquets permettent d'éviter un glissement de la gaine sur le sol, et de la maintenir ainsi au plus près des cultures. Ces piquets peuvent constituer par exemple des barres en forme de U avec une tige en acier.

Selon un mode de réalisation (figures 10A et 10B), pour permettre facilement l'installation au sol du système 10 comportant un réservoir 20 du type gaine souple, par exemple pour éviter que la gaine souple ne vrille lors de son déroulement au sol, le système 10 comporte des moyens de guidage de déploiement 150 du réservoir 20. Selon un exemple de réalisation (figure 10A), les moyens de guidage de déploiement 150 constituent des renforts au niveau de la soudure de la gaine souple. Par exemple, de tels renforts peuvent être avantageusement positionnés tous les trois mètres. D'autres moyens de guidage de déploiement 150 peuvent être envisagés, comme par exemple, des guides tubulaires positionnés au sol, le long de l'implantation prévue pour la gaine souple, ou un renfort longitudinal le long de la gaine souple (figure 10B), une ligne de soudure visible, une ligne de couleur, un fil tendu le long de la gaine.

Le système de stabilisation 140 peut constituer un moyen de guidage de déploiement 150 : par exemple les piquets de stabilisation permettent le positionnement du réservoir 20.

L'invention concerne également **une serre agricole 200** (figure 1) comprenant au moins un système passif de régulation thermique 10 selon l'une des revendications précédentes.

### Position des réservoirs

Au sein de la serre agricole 200 les systèmes passifs de régulation thermique 10 peuvent être positionnés à différents endroits de la serre 200, mais de façon préférée, le réservoir 20 est positionné :
- sans occasionner d'ombrage aux cul-ures - afin de ne pas limiter la photosynthèse ;
- face au rayonnement solaire - afin d'accumuler un maximum de chaleur (dans le cas contraire, il accumule aussi de la chaleur par convection comme illustré sur la figure 15A) ; et
- en vis-à-vis direct avec les cultures - afin de rayonner la chaleur/fraicheur directement sur les cultures, c'est-à-dire afin que la paroi 30 ait une surface tournée vers les cultures maximisant les facteurs de forme entre cette surface tournée vers les cultures et les surfaces des cultures.

Selon un premier mode de réalisation, au moins un réservoir 20 d'un système passif de régulation thermique 10 est positionné sur le sol (figures 11A à 12C). Selon un exemple de réalisation tous les réservoirs des systèmes passifs de régulation thermique 10 sont positionnés sur le sol. Un avantage de positionner le réservoir 20 sur le sol, est que le système 10 réchauffe à la fois l'air ambiant et le sol, le réseau racinaire des plants se développant alors plus rapidement. Cette disposition permet également de placer le système 10 sans occasionner d'ombrage sur les cultures quelle que soit l'orientation de la serre 200 : de ce fait, le système 10 ne bloque pas le rayonnement solaire utile à la photosynthèse.

De façon avantageuse (figures 4A à 4F) le réservoir 20 est positionné sur le sol de façon à ce que l'une de ses extrémités soit surélevées par rapport à l'autre, de façon à faciliter les opérations de remplissage et vidange du réservoir.
Les figures 11A à 12C illustrent différentes configurations de serre 200, comportant des systèmes 10 dont le réservoir est posé au sol :
- la figure 11A illustre un exemple dans lequel le réservoir est une gaine souple de forme tubulaire posée sur le sol dans un tunnel, entre deux plants ;
- la figure 11B illustre un exemple dans lequel le réservoir est une gaine souple de forme tubulaire posée sur le sol dans un tunnel, sous des tablettes ;
- la figure 11A illustre un exemple dans lequel le réservoir est une gaine souple de forme tubulaire posée sur le sol dans une multi-chapelle ;
- la figure 12A illustre un exemple dans lequel le réservoir est un tube rigide posé sur le sol dans un tunnel, entre deux plants ;
- la figure 12B illustre un exemple dans lequel le réservoir est un tube rigide posé sur le sol dans un tunnel, sous des tablettes ;
- la figure 12C illustre un exemple dans lequel le réservoir est un tube rigide posé sur le sol dans une multi-chapelle.

Selon un exemple, une première extrémité du réservoir 20 est plus haute que la seconde extrémité du réservoir 20, le diamètre du réservoir 20 est alors avantageusement supérieure à la différence de hauteur entre les deux extrémités, afin d'éviter une pression trop forte exercée par le fluide de l'accumulateur 40 sur la paroi formant l'extrémité avale du tube. Si la configuration du terrain implique une différence de hauteur supérieure au diamètre du tube, alors les soudures et l'épaisseur du matériau sont adaptés en conséquence afin de résister à la pression exercée par le fluide en aval.

Selon un second mode de réalisation (non représenté), la serre 200 comporte des plants de cultures 210 positionnées sur des tablettes 220, au moins un réservoir 20 d'un système passif de régulation thermique 10 est fixé sous au moins une tablette 220 (non représenté). Cette disposition permet également de placer le système 10 sans occasionner d'ombrage sur les cultures et sans perte de place quelle que soit l'orientation de la serre.

Selon un troisième mode de réalisation, la serre 200 comporte des gouttières 230 au moins un réservoir 20 d'un système passif de régulation thermique 10 étant fixé sous au moins une gouttière 230 (figures 13A, 13B). Cette disposition permet également de placer le système 10 sans occasionner d'ombrage sur les cultures et sans perte de place quelle que soit l'orientation de la serre .

La figure 13A illustre un exemple dans lequel le réservoir est une gaine souple en forme de poche fixée et suspendue à une gouttière (suivant un axe Est/Ouest).

La figure 13B illustre un exemple dans lequel le réservoir est une gaine souple en forme de poche fixée à une gouttière, et reposant sur le sol (suivant un axe Est/Ouest).

Selon un quatrième mode de réalisation (figures 14A, 14B), la serre 200 comporte des long-pans, pignons ou travées 240, au moins un réservoir 20 d'un système passif de régulation thermique 10 étant fixé le long d'au moins un long-pan, pignon ou une travée ou le long des poteaux intérieurs (sur une périphérie ou par rapport à des poteaux intérieurs) 240.

La figure 14A illustre un exemple dans lequel le réservoir est une gaine souple en forme de poche fixée et suspendue à une paroi ou une travée de la serre 200 (suivant un axe Est/Ouest).

La figure 14B illustre un exemple dans lequel le réservoir est une gaine souple en forme de poche fixée à une paroi ou une travée de la serre 200, et reposant sur le sol (suivant un axe Est/Ouest).

Selon un exemple de réalisation, le réservoir 20 fixé à une tablette, une gouttière, un long-pan ou une travée ne touche pas le sol, il est suspendu (figures 13A, 14A).

Selon un exemple de réalisation, le réservoir 20 fixé à une tablette, une gouttière, un long-pan ou une travée repose sur le sol, il n'est pas suspendu (figures 13B, 14B).

De façon avantageuse, un système passif de régulation thermique 10 est placé de chaque côté des plants de culture, afin d'optimiser et homogénéiser la quantité de chaleur fournie aux cultures.

Enfin, selon un mode de réalisation (non représenté), le réservoir 20 est positionné au moins partiellement sous terre (en pleine terre, le long des rangs de culture de préférence), une surface de la paroi 30 étant laissée libre, affleurante avec le sol, afin de capter les rayonnements solaires.

### Spécificités des réservoirs par rapport à la serre

De façon avantageuse, le réservoir 20 contient plusieurs dizaines de litres de fluide accumulateur 40 au mètre carré dans la serre 200.

Selon une variante de réalisation (figures 9A et 9B), au sein de la serre 200, chaque système passif de régulation thermique 10 posés au sol comporte un ensemble de piquets positionnés tous les 3 mètres par exemple, afin d'éviter un glissement de réservoir 20 sur le sol, et de la maintenir ainsi au plus près des plants de cultures.

### Equipements complémentaires de régulations de la température dans la serre

De façon avantageuse, la serre 200 comporte au moins un ventilateur. Ce dernier peut être positionné au plafond de la serre 200, de façon à faire redescendre la chaleur au sol et ainsi rendre la température au sein de la serre encore plus homogène. Le ventilateur peut également être positionné sur un support au-dessus des cultures, afin de brasser l'air et ainsi rendre la température au sein de la serre encore plus homogène et baisser l'humidité de la feuille pour assécher la feuille.

Enfin, la serre 200 comporte au moins une sonde pour mesurer la température de l'air ambiant et au moins une sonde pour mesurer la température au sein du réservoir 20.

Selon un mode de réalisation, la serre 200 comporte au moins un système de déshumidification de l'air de la serre.

L'invention n'est pas limitée aux modes de réalisation présentés et d'autres modes de réalisation apparaîtront clairement à l'homme du métier.

### Liste de références

- **10** :: **système passif de régulation thermique**
- 20 :: réservoir absorbeur/diffuseur et accumulateur de chaleur
- 30 :: paroi du réservoir 20, apte à absorber et diffuser la chaleur
- 40 :: accumulateur de chaleur
- 50 :: moyen de remplissage en fluide du réservoir 20
- 60 :: moyen de vidange du fluide du réservoir 20
- 66 :: vanne raccordée au moyen de vidange 60
- 68 :: système de modification réversible de la perméabilité
- 70 :: ouverture du réservoir 20
- 80 :: bouchon du réservoir 20
- 85 :: ouverture d'évacuation/aspiration d'air
- 90 :: système de chauffage de l'accumulateur 40
- 92 :: chaudière du système de chauffage 90
- 100 :: échangeur de chaleur du système de chauffage 90
- 110 :: système de refroidissement de l'accumulateur 40
- 112 :: moyen de récupération d'eau froide
- 120 :: échangeur de chaleur du système de refroidissement 110
- 140 :: moyens de stabilisation au sol de la position du réservoir 20
- 150 :: moyens de guidage de déploiement du réservoir 20

- **200** :: **serre agricole**
- 210 :: plants de cultures de la serre 200
- 220 :: tablette portant les plants de cultures 210
- 230 :: gouttière de la serre 200
- 240 :: long-pans et/ou travées et/ou poteaux intérieurs de la serre 200

## Revendications

1. Système passif de régulation thermique (10) pour serre agricole (200), comprenant au moins un réservoir (20) absorbeur/diffuseur et accumulateur de chaleur destiné à être exposé au rayonnement solaire, **caractérisé en ce que** ledit réservoir (20) est destiné à être positionné sur le sol, ledit réservoir (20) comportant une paroi (30) formant un absorbeur/diffuseur de chaleur apte à être chauffé par rayonnement solaire, et un accumulateur (40) de chaleur apte à stocker de l'énergie calorifique absorbée par la paroi (30), la paroi (30) étant apte à transférer de la chaleur à l'accumulateur (40), et apte à transférer puis diffuser la chaleur ou la fraicheur de l'accumulateur (40) vers l'extérieur du réservoir (20).

2. Système (10) selon la revendication 1, dans lequel la paroi (30) possède une surface apte à être tournée vers des cultures lorsque le réservoir (20) est positionné dans une serre (200), ladite surface étant apte à maximiser le facteur de forme entre ladite surface tournée vers les cultures et une surface des cultures.

3. Système (10) selon l'une des revendications précédentes, dans lequel l'accumulateur (40) de chaleur a une capacité thermique volumique supérieure ou égale à celle de l'eau à l'état liquide.

4. Système (10) selon l'une des revendications précédentes, dans lequel l'accumulateur (40) de chaleur comporte un fluide et/ou un solide.

5. Système (10) selon l'une des revendications précédentes, dans lequel la conductivité thermique de la paroi (30) est supérieure à 0,15 W m-1 K-1 à 20°C, et la paroi (30) est réalisée en un matériau sombre ayant un coefficient d'absorption solaire supérieur à 0,7, et/ou la paroi (30) est recouverte d'un revêtement sombre ayant un coefficient d'absorption solaire supérieur à 0,7.

6. Système (10) selon l'une des revendications précédentes, dans lequel la paroi (30) est réalisée en un matériau choisi seul ou en combinaison parmi les matériaux suivants : plastique, polyéthylène (PE), polychlorure de vinyle (PVC), métal.

7. Système (10) selon l'une des revendications précédentes, dans lequel la paroi (30) comporte au moins une première zone constituée d'un premier matériau, et une seconde zone constituée d'un second matériau, la première zone étant la partie supérieure du réservoir (20) et le premier matériau étant un matériau absorbeur du rayonnement solaire, et la seconde zone étant la partie inférieure du réservoir (20) et le second matériau étant constitué d'un second matériau isolant thermiquement.

8. Système (10) selon l'une des revendications précédentes, dans lequel la paroi (30) forme un tube rigide ou une gaine souple dont le module d'élasticité est inférieur à 0,7GPa, de préférence égale à 0,02GPa.

9. Système (10) selon la revendication précédente, dans lequel la gaine souple a une forme de poche ou une forme sensiblement tubulaire fermée à ses extrémités par un moyen de pincement, un clip, un nœud, une soudure ou un collage.

10. Système (10) selon l'une des revendications précédentes, dans lequel le réservoir (20) est connecté à un système de chauffage (90) de l'accumulateur (40) et/ou à un système de refroidissement (110) de l'accumulateur (40).

11. Système (10) selon l'une des revendications précédentes, dans lequel la paroi (30) est configurée pour assurer à la fois une fonction d'échange thermique et une résistance mécanique, notamment au perçage, lorsque le réservoir (20) est disposé sur le sol.

12. Système (10) selon l'une des revendications précédentes, dans lequel chaque extrémité du réservoir (20) est surélevée.

13. Système (10) selon l'une des revendications précédentes, dans lequel la paroi (30) est une paroi multicouche, comportant une première couche interne apte à favoriser l'étanchéité du réservoir (20), et une seconde couche externe apte à favoriser la captation du rayonnement solaire et d'offrir une résistance mécanique permettant d'éviter notamment le perçage du réservoir (20).

14. Système (10) selon l'une des revendications précédentes, dans lequel ladite paroi (30) a une épaisseur comprise entre 0.3mm et 1cm

15. Serre agricole (200) comprenant au moins un système passif de régulation thermique (10) selon l'une des revendications précédentes.
